# EUROPEAN PATENT SPECIFICATION

(11) **EP 2 514 805 B1**
(45) Date of publication and mention of the grant of the patent: **08.01.2020**
(21) Application number: 12386011.6
(22) Date of filing: 30.03.2012
(51) Int. Cl.: C10L 5/14, C10L 5/36, C10L 5/44

(54) **New method for producing charcoal from olive kernels**
Neues Verfahren zur Herstellung von Holzkohle aus Olivenkernen
Nouveau procédé de production de charbon de bois à partir de noyaux d'olives

(30) Priority: 18.04.2011 GR 2011100241
(43) Date of publication of application: 24.10.2012
(73) Proprietor: Kottaridi, Klimentia, 24100 Kalamata (GR)
(72) Inventor: Kottaridi, Klimentia, 24100 Kalamata (GR)
(74) Representative: Torggler & Hofinger Patentanwälte

(56) References cited:
- GR-B- 1 007 034
- US-A- 3 068 080
- US-A- 4 102 653
- US-A- 4 158 549

## Description

The present invention relates to a modification of the Greek Patent No. 1007034, filed in OBI on 13/07/2009 with application number 20090100391.

The present invention relates to a method for producing charcoal from olive kernels. The final product is 100% natural, has a low production cost, and its heating value exceeds that of the conventional fuels.

The production of kernel charcoal is effected in Greece since 1974. Until that time, the kernel wood, which is the base of the product and is the solid waste of olive presses, was considered a by-product of the olive oil production procedure, which had no specific utility. The kernel wood is derived during the separation of the kernel oil from the wood part of the olive kernel and until now it is used as described in Patent No. 1007034, either directly as such, or after treatment to charcoal briquettes. The advantages of the product is that it ignites easily, does not emit odors during combustion, and it has a significant heating value, releasing at the same time less quantities of carbon monoxide in the atmosphere compared to charcoal derived from the combustion of wood. Further advantages of the product is that it is a 100% natural product, which is produced by using olive kernel residues, which otherwise would be discharged, whereas at the same time it can be produced in many areas around the country. The cost of the conversion of the wood part to kernel charcoal is low and thus the cost for the consumer is similarly low, thereby providing a fuel material with excellent quality features. Furthermore, the production method is environmentally friendly, since no chemical additives are used, providing an ecological fuel.

The production procedure which has been employed until now exploits the capacities of the product, but not to the greatest degree. One of the major problems observed, which is addressed by the present modification, is the moisture in the final product available to the customer. The procedure of kernel charcoal production involved the supply of kernel wood and limestone to kiln, so that kernel powder as intermediate product was obtained, which was then mixed with pre-gelatinized starch and water, before being supplied to a press and dried. The use of water was apparently effected both for mixing and homogenization of the product, before being supplied to the press, and for cooling the kernel powder after being removed from the kiln. Since the water quantity used for cooling the kernel powder is not fixed, nor can it be predicted, but it depends on the individual conditions, moisture was always present in the final product. Additional moisture could also be supplied during the introduction of ambient air in the drier, which constitutes the final step in the production of kernel charcoal briquettes.

The absorption of ambient air unavoidably increases the drying time, since some time is required for moisture removal. A further disadvantage which affected the quality of the final product is the simultaneous mixing of the intermediate product with starch and water. During the procedure, lumps could be formed, since starch dissolution was not completely successful, thereby affecting the final product and reducing its heating value.

US 3068080 discloses a charcoal composition, where the charcoal is mixed with starch. US 4102653 discloses smoke generating briquettes which include pre-gelatinised corn starch. US4158549 discloses an incense composition including a starch binder. Improving the homogeneity of a composition including starch is not mentioned in any of these prior art documents.

In contrast, the present modification addresses all the previous advantages and provides an improved product suitable to cover the consumer's needs. The drying steps of the product have been doubled, whereas during drying of the briquettes, which constitute the final step in the procedure, no burner heating the ambient air is used, but a closed circuit circulating the already dry air, thereby contributing both in the optimal drying of the product and in the acceleration of the procedure.

In an embodiment not according to the invention the initial drying of the kernel powder allows the production of an intermediate product, the dry kernel powder, which is also suitable as a fuel material, both for burners and braziers and for greenhouses.

A feature of the procedure not according to the invention relates to the production of briquettes from kernel wood. Until now (i.e. in the prior art), a product was obtained from kernel wood, without burning the latter, which was ideal for heating since it produced more smoke, and it was cheaper. Kernel wood is not directly supplied to the press for forming, but is mixed with starch and hot water in separate steps, so that a mixture of increased heating value is obtained. As an example, the heating value of the kernel wood itself is 4,647 Kwh/Kg, whereas after mixing with starch and water, the mixture has an increased heating value reaching 5225.65 Kwh/Kg.

These and further features and advantages of the present invention will be apparent in the following detailed description. The invention will be fully understood with reference to the accompanying figures, which show an exemplary embodiment of the invention.
Figure 1 shows all the steps followed during production of kernel charcoal from kernel wood as raw material, as well as all the intermediate products which are obtained and which can be used in various other domestic or industrial applications.
Figure 2 shows a flow diagram of the simplified production of kernel charcoal briquettes directly from kernel wood. This simplified production method is however not part of the invention.

Referring to the accompanying figures, an exemplary embodiment of the invention will be described.

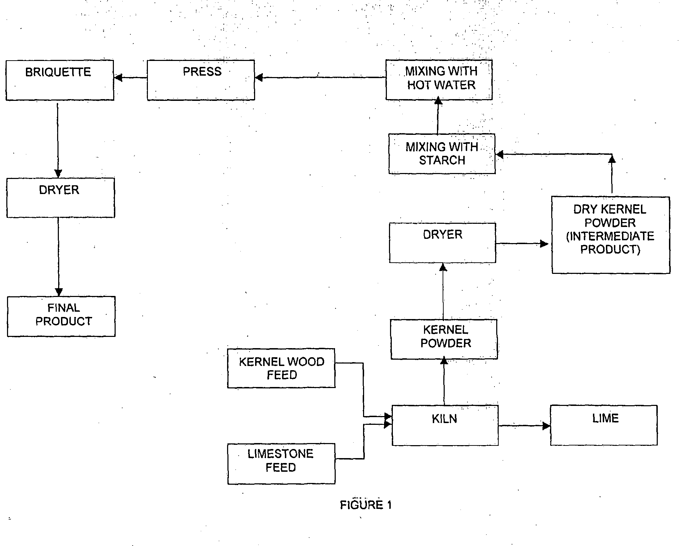

As raw material for the production of kernel charcoal briquettes, kernel wood derived from olive presses during separation of olive kernels from kernel oil is used. The kernel wood has been used in the past instead of limestone in the production of lime (figure 1). Kernel powder was obtained as solid waste in the kiln during lime production, which was then discharged as useless. It was demonstrated that kernel powder, after suitable treatment, provides a product with significant heating value, which is ideal for use as a fuel. The kernel powder formed in the kiln due to an incomplete combustion of the kernel wood is cooled by water. The water quantity is not fixed, thus the product is first conveyed to a dryer to discharge the absorbed moisture.

Consequently, an intermediate product is obtained, namely the dry kernel powder. This intermediary product could be directly used as fuel in burners, boilers, braziers in houses or in greenhouses for temperature control, which is however not part of the invention.

Given that the kernel powder has been dried and discharged all its further moisture, it can then be mixed with water starch. This procedure is now effected in two steps, instead of one as in the past. Firstly, the dry kernel powder is mixed with the starch, followed by mixing with hot water. In this way, lumping of the starch during
mixing is prevented and a better dissolution is effected, which contributes to the quality of the final product significantly. Considering that the kernel powder had been dried before mixing, the moisture content is minimal, thus the proportion of hot water required in the procedure is predetermined. In this way, the moisture in the final product is completely controlled, which contributes to the proper combustion thereof. A subsequent step is the transfer of the product to the press, from which the major product is extracted. This is formed in the press to a round shape, of exemplary dimensions 6cm ^{∗} 6cm, also known as briquette. Forming is also advantageous for the consumers, since fragmentation is prevented and the commercially available product is unfragmented.

In a final step of the procedure, the briquettes are conveyed to another dryer, where any moisture traces are removed from the fuel. In the dryer, the procedure is effected by air circulation rather than ambient air absorption. The closed circuit has the advantage that moisture-free air, e.g. the ambient air, is circulated, and thus the procedure is accelerated and an increased control on the quality of the produced kernel charcoal is effected.

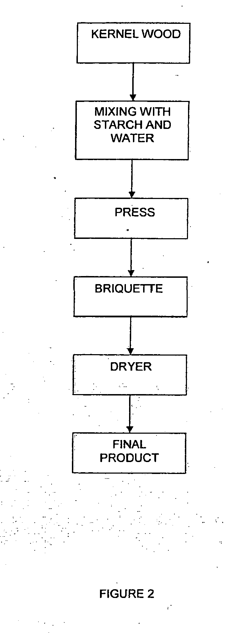

In another embodiment not according to the invention, figure 2, the kernel wood is initially mixed with starch and then with water, before being conveyed to the press. In this case, the incomplete combustion of the material is obviated, and the briquette obtained is ideal as heating fuel. Since kernel wood is used as raw material, the final product produces more smoke, however, due to its reduced production cost, it is cheaper for the consumer. The mixing with starch and water increases the heating value of the final product, which is dried in a closed air circuit in a conventional manner, before being packaged and marketed.

## Claims

1. Method for producing charcoal from olive kernels, wherein limestone and kernel wood are supplied to a kiln in order to produce a kernel powder as an intermediary product through incomplete combustion of the kernel wood, wherein the kernel powder, after being dried in a dryer, is firstly mixed with starch and then with hot water, so that a mixture is obtained which is then conveyed to a press in order to acquire the shape of a briquette, which, after being dried again in a dryer of a closed air circuit type, constitutes the final product.

## Patentansprüche

1. Verfahren zur Produktion von Kohle aus Olivenkernen, wobei Kalkstein und Kernholz in einen Brennofen hineingegeben werden, um Kernpulver als Zwischenprodukt durch unvollständige Verbrennung des Kernholzes zu produzieren, wobei das Kernpulver nach Trocknen in einem Trockner zuerst mit Stärke und danach mit heißem Wasser vermischt wird, sodass eine Mischung erhalten wird, welche dann zu einer Presse zum Erzeugen einer Brikett-Form gebracht wird, welche, nach erneutem Trocknen in einem Trockner mit geschlossenem Luftkreislauf, das Endprodukt bildet.

## Revendications

1. Procédé de production de charbon à partir de noyaux d'olive, dans lequel de la chaux et du bois de noyau sont fournis à un four afin de produire une poudre de noyau en tant que produit intermédiaire par combustion incomplète du bois de noyau, dans lequel la poudre de noyau, après avoir été séchée dans un sécheur, est d'abord mélangée à de l'amidon puis à de l'eau chaude, de sorte qu'un mélange est obtenu qui est alors acheminé dans une presse afin d'acquérir la forme d'une briquette, qui, après avoir été séchée à nouveau dans un sécheur d'un type de circuit à air fermé, constitue le produit final.
